# EUROPEAN PATENT SPECIFICATION

(11) **EP 0 469 475 B1**
(45) Date of publication and mention of the grant of the patent: **06.04.1994**
(21) Application number: 91112559.9
(22) Date of filing: 26.07.1991
(51) Int. Cl.: B62K 25/00, B62K 21/00

(54) **Front suspension for motor-cycles**
Vorderradaufhängung für Motorräder
Suspension antérieure de motocycle

(30) Priority: 30.07.1990 IT 2111690
(43) Date of publication of application: 05.02.1992
(73) Proprietor: CAGIVA SERVICES S.p.A., I-21100 Varese (IT)
(72) Inventor: Albesiano, Romano, I-12060 Farigliano, Cuneo (IT)
(74) Representative: Luksch, Giorgio, Dr.-Ing.

(56) References cited:
- EP-A- 0 211 638
- EP-A- 0 294 866
- EP-A- 0 443 690
- FR-A- 2 418 141
- GB-A- 833 741

## Description

The present invention relates to a front suspension for motor-cycles of the kind recited in the preamble of the main claim.

Several suspension systems of the above mentioned type are already known, which, while operating in a comparatively satisfactory manner, are however affected by some drawbacks.

These suspension, for example, have a comparatively large size which weighs down the motor cycles also from a mere aerodynamic standpoint. Accordingly, the motor-cycle has a high fuel consumption and the power of its engine is exploited with a poor efficiency.

Moreover, prior suspension systems (for example a conventional fork suspension system) have frequently a small stiffness which involves obvious problems.

Other suspension systems are very complex construction-wise and have a comparatively high cost.

The prior document FR-A-2418141 relates to a motor vehicle such as a motor-cycle having a frame, an engine, a handle-bar, a front wheel and a rear wheel, each wheel being provided with a disc and pneumatic tyres. The engine of such a motor-cycle is suitable for acting as a force transmission member for directly transmitting static and dynamic stresses between the vehicle front and rear parts. The document also shows a front suspension comprising an articulated parallelogram (2,3,4,5, the apexes being 8,9,10,11) one side of which (5) rotatably supports the wheel (7) and, in view of the particular joints used at two apexes (10,11) the wheel supporting side (5) of the parallelogram can be moved around an axis (101) passing through the apexes (10,11) for steering purposes. Steering is accomplished though a linkage connecting side (5) with the handlebar. A shock absorber (12) is interposed between the vehicle frame and one side (3) of the parallelogram.

The disadvantages of the device of this art are: low stability, rigidity on uneven roads, low comfort and possible torsional deformations due to torsional stresses, and use of particularly complicated joints.

Accordingly, the main object of the present invention is to provide a front suspension for motor-cycles which has a small size, is reliable in operation, can be made at a low cost and, moreover, has a great mechanical stiffness.

A further object is to provide a suspension of the above mentioned type which has a low weight and which affects only in a negligible way the aerodynamic properties of the vehicle.

According to one aspect of the present invention, the above mentioned objects, as well as yet other objects, which will become more apparent to those skilled in the art, are achieved by a front suspension for motor-cycles whose inventive features are set in characterizing parts of the independent claims for all the designated Contracting States.

Another motorcycle suspension is described in EP-A-443690, which was published after the priority date of the present application and thus constitutes prior art according to Article 54(3), and designates the Contracting States DE, FR, GB designated by the present application.

The invention will become more apparent thereinafter from the following exemplary disclosure given by way of a merely indicative but not limitative example, with reference to the accompanying drawings, where:
Figure 1 is a partially broken away schematic view showing a motor-cycle according to the invention;
Figure 2 is a front view of the motor-cycle of Figure 1, with some portions being omitted for clearness;
Figure 3 is a top view of the motor-cycle shown in Figure 1;
Figure 4 is a cross-sectional view taken along the section line IV-IV of Figure 3;
Figure 5 is a cross-sectional view taken along the section line V-V of Figure 3, with some portions omitted for clearness;
Figures 6 and 7 show cross-sectional views similar to that of Figure 4, but related to other embodiments of the invention;
Figure 8 is a schematic perspective view of a variation of the motor-cycle of Figure 1; and
Figure 9 is a side schematic view of the motor-cycle of Figure 8.

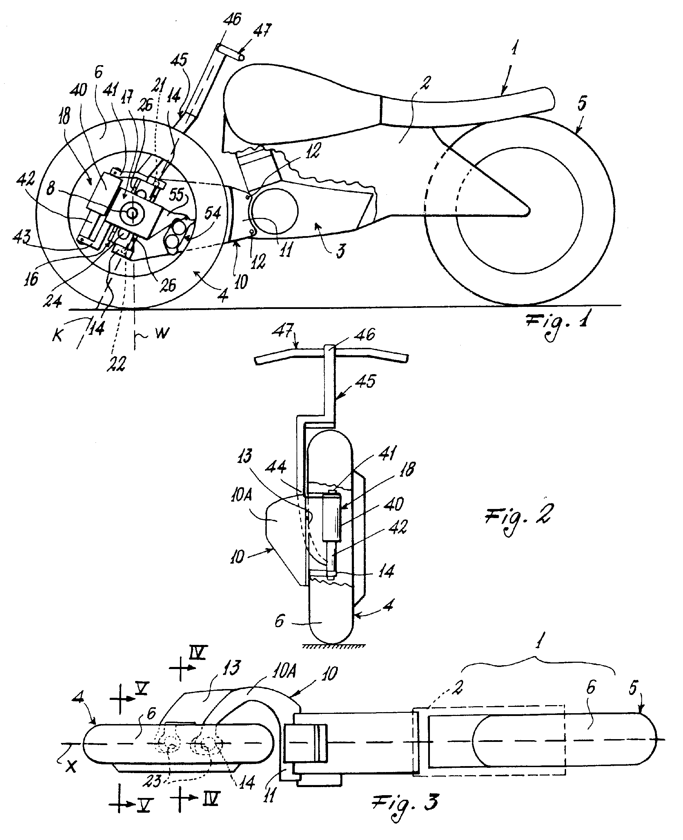

With reference to Figures 1 to 5, a motor-cycle is herein indicated at 1 and comprises a frame 2, an engine 4, a front wheel 4 and a rear wheel 5.

Each wheel is provided with a pneumatic tyre 6 supported by a disc 7; the latter, in the wheel 4, is rigid with and is supported by a wheel supporting axle 8, whilst the rear wheel is supported by a suspension system known per se, and, accordingly, it has not been shown.

According to the invention, to a portion of the motor-cycle (in the embodiment being disclosed to the engine 3) there is couped a rigid arm 10 which is longitudinally arranged with respect to the motor-cycle 1, that is being substantially parallel to the ground T on which the motor-cycle is driven.

The longitudinal arm 10 is laterally arranged of the wheel 4 and is coupled, at one end 11 thereof, to the engine 3 (or to the frame 12) by restraining means of a per se known type (for example bolts 12).

At the other end portion 13 thereof, the arm 10 has a substantially fork-like shape and is provided with two ring elements 14 which, advantageously, have a common axis K which is slanted with respect to the ground T. In particular, the axis K lies in the middle plane of the wheel, the inclination of said axis and the distance thereof from the axis of the wheel W defining the forward stroke of the motor-cycle 1.

Said arm 10 can be made in a single body or integral with a closed section sheel construction in order to have a high stiffness; however it can also be made in a different way, for example of a welded pipe construction encompassed by a casing.

Said longitudinal rigid arm 10 supports, at said end portion 13 thereof, a guiding element 16 adapted to operate as a guide for driving an element 17, which can slide on said guiding element 16, to which the wheel supporting axle 8 is connected.

Finally, said guiding element 16 and slider element 17 are coupled to a shock absorber element 18 adapted to absorb and dampen the stresses affecting the wheel 4.

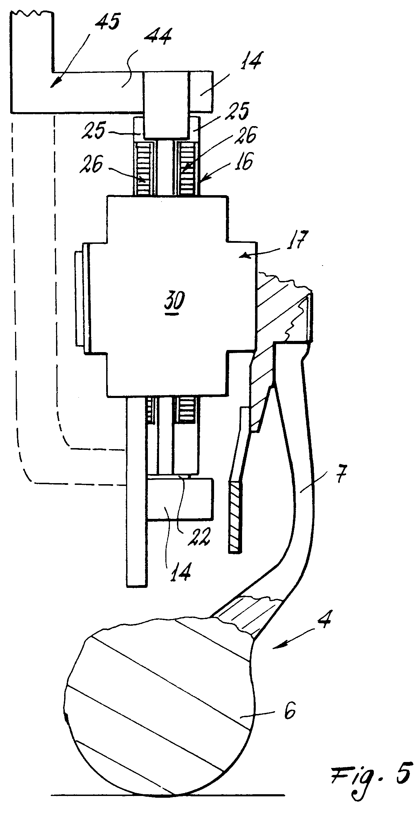

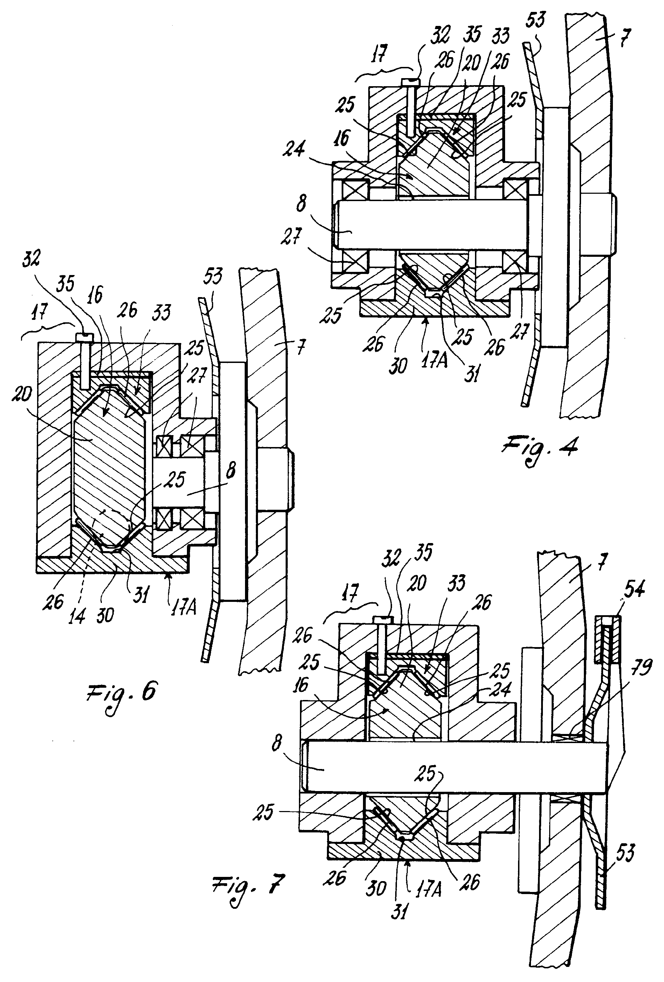

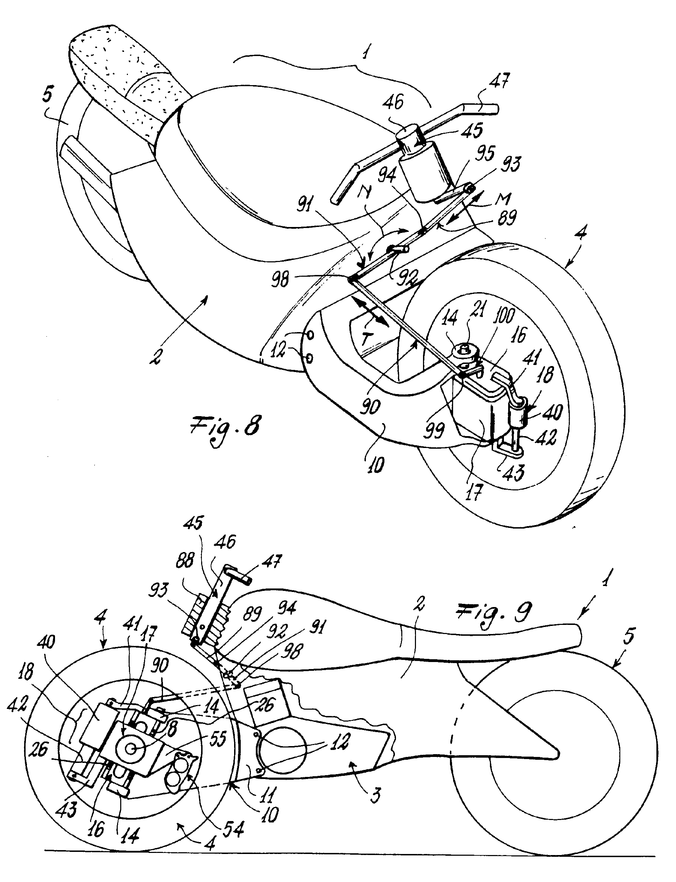

More specifically (see Figure 4), the guiding element 16 is provided with a body 20 at the opposite end portions of which there are arranged two pins 21 and 22 (shown in Figure 1) which cooperate with the ring element 14 in which conventional bearings 23 are assembled (Figure 3).

The pins 21 and 22 are advantageously arranged at an eccentrical position on the ends of said body 20.

The latter has a poligonal contour and comprises a central elongated throughgoing gole 24, in which the wheel supporting axle 28 can be displaced.

Laterally, on the perimeter of the body 20, there are provided tracks 25 for the displacement of the guiding elements 26, for example of a roller type; on said elements 26, in turn, the slider element 17 (or simply slider 17) being displaceably driven.

Said slider 17 supports the axle 8 through bearings 27.

In order to compensate or adjust the clearance between the slider 17 and guiding element 16, the slider is provided, on a side 17A thereof, with a plug element 30 having a wall 31 facing the guiding element 16 and provided with a shape complementary to the profile of said guiding element 16. For adjusting the above mentioned clearance, between the slider and guiding element 16 there is moreover arranged at least an insert 33 which, advantageously, can be provided with a wedge-like shape on the side thereof opposite to the side on which there are arranged the elements 26, and cooperating with the side of the slider opposite to that where there is arranged the plug 30.

This insert 33 cooperates with at least a wedge-like element or wedge 35 arranged between said insert and the slider 17, said cooperation allowing to take up or adjust the clearance between said slider and the guiding element 16. The insert 33, furthermore, is restrained in its operating position by means of clamping elements such as, for example, screws 32 (only one of which is shown in the Figures) cooperating with said element 17.

As stated, the slider element 17 and guiding element 16 are coupled by a shock absorber element 18 having a per se known construction.

More specifically, in the embodiment being disclosed and illustrated, a conventional cylinder 40 of the shock absorber element 18 is rigid, through an arm 41, with the guiding element 16, whereas the piston 42, which is movable with respect to this cylinder, is rigid, through an arm 43, with the slider 17.

The absorber element 18, anyhow, can be restrained through its cylinder 40 and piston 41 respectively to the slider 17 and guiding element 16.

Finally, in the exemplary embodiment being disclosed, to the mentioned guiding element 16 there is coupled an end portion 44 of a steering column 45, having at the free end portion 46 thereof, a conventional handle bar 47. This steering column 45 can be restrained, in any known manner, to a single end portion of the body 20 of the guiding element 16, or to both the end opposite portions of said body (as shown by the dashed lines in Figures 2 and 5).

The thus constructed steering column is not associated to any elements of the frame 2 of the motor-cycle, but it is directly supported, through the guiding element 16, by the rigid arm 10.

As shown, at least a conventional brake disc 53 (either of a normal or self ventilated type) is associated in a known manner to the disc 7; on this disc a conventional braking shoe 54 can operate, said shoe being associated to the slider 17 by means of a supporting arm 55.

Supposing now that a motor-cyclist is driving the motor-cycle 1 and desire to change the driving direction.

In this case, by turning the handle bar 47 and accordingly the steering column 45, the guiding element 16 is turned about the pins 21 and 22; the latter, in particular, will turn in the bearings 23 associated with the ring element 14 of the fork end portion 13 of the arm 14.

Since this arm is spaced, by a portion 10A thereof, from the longitudinal axis X of the motor-cycle (Figure 3) the handle bar 47, and accordingly the wheel 4, can be turned in the two directions in an easy manner.

Suppose now that the motor-cyclist desires to brake the motor-cycle.

In this case, the brake shoe 54 will operate on the disc 53 turning with the wheel 4.

Upon braking, a main portion of the motor-cycle weight will be born by the front wheel. Owing to this, and by means of the shoe 54, the slider 17 will slide on the roller guiding elements 26 which, in turn, will be driven on the guide 16 with a speed which, with respect to the latter, is substantially equal to a half of the sliding speed of the slider 17.

This displacement is hindered by the element 18. In fact, under the above mentioned condition, the piston 42 will be driven, together with the slider 17, with respect to the cylinder 40 connected, with the guide 16, to the arm 10.

The element 18, accordingly, will absorb the stresses on the wheel 4.

Likewise, the element 18 will absorb any stresses acting on the wheel 4 during the driving on the ground T, as the ground is uneven. In that case, moreover, the displacements of the wheel 4 due to the suspension movement are allowed by the hole 24 therethrough the axle 8 is driven.

It should be moreover pointed out that even if the steering column 45, made as stated (direct steering), is not restrained to any sleeve or other restraining means for restraining it to the frame 2, it is so designed as not to be appreciably bent as the motor-cycle is used (and in particular during a braking operation); moreover, both the steering column 45 and the arm 13 are not subjected to torque stresses susceptible to negatively affect their stability and mechanical strength.

Figures 6 and 7 illustrate two modified embodiments of the invention, in said Figures parts corresponding to those of Figures 1 to 5 being indicated at the same reference numbers.

More specifically, in Figure 6 the wheel supporting axle 8 does not pass through the guide 16 but is associated with a single side 80 of the sleeder 17.

In Figure 7, on the other hand, the axle 8 is similar to that of Figure 6 but, in addition to the previous disclosure, the braking disc 53 is arranged on the side of the wheel disc 7 opposite to that where are arranged the guide 16 and slider 17.

In this case, the brake shoe 54 is arranged on the hub bearing axle 8 restrained to the slider 17. Between the axle and disc 7 there is provided at least a conventional bearing 79.

According to this embodiment, the shoe 54 can not turn and is adapted to suitably affect the brake disc 53 to properly brake the vehicle.

Both the embodiment of Figure 6 and that of Figure 7 can be operated in a similar way to that of the already disclosed Figures 1 to 5; thus, such an operation will be not disclosed again.

It should be noted that, advantageously, in all of the shown embodiments, the shock absorber element 18 is symmetrically arranged of the brake shoe 54 with respect to the axle 8. This is provided in order to improve the weight distribution on said axle (and accordingly on the wheel).

Figures 8 and 9 show a variation of the motor-cycle of Figures 1 to 7. In these Figures parts which correspond to the above disclosed parts have been indicated by the same reference numbers.

In the modified embodiment being disclosed, the steering column 45 is of a per se known type and is engaged within a sleeve 88 of the frame 2, the displacement of the handle-bar 47 being transmitted to the front wheel 4 in an indirect way (indirect steering) through rods 89 and 90 and a rocker assembly 91 arranged between the two rods and turning about a fixed pivot pin 92 restrained on the frame 2. As shown, the rods 89 and 90 are arranged in planes which are substantially parallel to the travel direction and on two opposite sides of the motor-cycle 1; the rocker assembly 91 being transversely arranged with respect to the travel direction.

More specifically, the rod 89 is pivoted, through conventional ball couplings 93 and 94 arranged at its opposite end portions, respectively on an arm 95 rigid with the rod 45 and on an end portion of the rocker assembly 91, the arm 95 being substantially parallel to the rocker assembly 91.

The other end of the rocker assembly is pivoted, for example through a ball coupling 98, to the rod 90 which, through a hinge, for example comprising a ball coupling 99, affects a rod 100 rigid with the guide 16.

Thus, as the handle-bar 47 is turned, the wheel 4 is caused to turn in the desired direction by properly driving the rods 89 and 90 and rocker assembly 91 (the movements of which have been indicated by arrows M, N, T). In this case, the transmission ratio of the handle-bar 47 to the wheel 4 can be made variable (by any known means) depending on the steering angle and the dynamic parameters such as speed, braking action, roll angle and the like.

To the foregoing it is to be added that the sleeve 88 can be restrained in addition to the frame 2, or instead to the frame, also to the engine 3 and/or to the longitudinal arm 10.

Finally, the wheel disc 7, in the embodiments shown in the Figures (with the exception of Figure 7) has a high camber in order to substantially hold therewithin the assembly including the guide 16 and slider 17.

## Claims (Claims for the following Contracting State(s): DE, FR, GB)

1. A front suspension for motorcycles of the type comprising a frame (2), an engine (4), a handle-bar (47), a front wheel (4) and a rear wheel (5), each said wheel being provided with a disc (7) and a pneumatic tyre, said suspension having a rigid longitudinal arm (10) arranged laterally of the front wheel (4), said arm (10) bearing at its free end a support on which the wheel bearing axle (8) is mounted, and said suspension having a shock absorber element (18) adapted to absorb the shocks and stresses affecting said front wheel (4), characterized in that the arm (10) is rigidly and immovably attached to a portion of the vehicle immovable with respect to the frame, such that the arm (10) extends substantially parallel to the ground, and in that the support comprises a guiding body (16) adapted to operate as a guide for a slider element (17) to which the wheel bearing axle (8) is connected, said guiding body (16) and said slider element (17) being mutually connected through a shock absorber element (18) adapted to absorb the shocks and stresses affecting said front wheel (4), in that the guiding body (16) is connected to the handle-bar (47) to be rotated therewith, and
in that the shock absorber element (18) is located in front of the slider element (17) parallely thereto and is connected to the slider element (17) such that said parallelism is maintained during suspension movement.

2. A suspension according to:Claim 1, characterized in that said rigid longitudinal arm (10) is restrained to the engine (3) of the motor-cycle (1) by any known means.

3. A suspension according to Claim 1, characterized in that said longitudinal rigid arm (10) is restrained to the frame (2) of said motor-cycle (1) by any known means.

4. A suspension according to Claim 1, characterized in that said rigid arm (10) has a free end portion (13) of substantially fork shape and being provided with two ring like elements (14) adapted to rotatively support a body (20) of the guide (16) thereon the slider element (17) is driven.

5. A suspension according to Claim 4, characterized in that said guide (16) is supported by pins (21, 22) which are eccentrically arranged on the body (20) of said guide (16).

6. A suspension according to Claim 4, characterized in that said guide (16) is arranged with the axis (K) thereof slanted with respect to the axis (W) of the wheel (4).

7. A suspension according to Claim 4, characterized in that the body (20) of the guide is provided with a throughgoing elongated hole (24), therethrough the wheel bearing axle (8) can move as the motor-cycle (1) is used.

8. A suspension according to Claims 1 and 4, characterized in that between the guide (16) and smider element (17) there are arranged sliding elements (26), advantageously of a roller cage type, thereon said slider element (17) can slide, said sliding elements (26) being advantageously adapted for movement along sliding tracks (25) formed at least within said guide (16).

9. A suspension according to Claims 4 and 8, characterized in that said suspension comprises means (30, 33) adapted to compensate the clearance between the guide (16) and slider element (17) said means cooperating with said sliding elements (26).

10. A suspension according to Claim 9, characterized in that said means for compensating said clearance comprises at least a wedge element (33) arranged between the guide (16) and slider element (17), said wedge element (33) being adapted to be locked in a set position by conventional screw clamping means (32) cooperating with said slider element (17).

11. A suspension according to Claim 9, characterized in that said means for compensating said clearance comprise a removable element (30) arranged on a side (17A) of said slider element (17), said removable element cooperating with said sliding elements (26) arranged at said guide (16).

12. A suspension according to Claim 1, characterized in that said longitudinal rigid arm (10) has a portion (10A) thereof spaced from the longitudinal axis (X) of said motor-cycle.

13. A suspension according to Claim 1, characterized in that the shock absorber element (18) comprises a cylinder (40) rigid with said guide (16) and a piston (42) which can be mutually displaced in said cylinder (40) and being rigid with said slider element (17).

14. A suspension according to Claim 1, characterized in that said slider element supports at least a conventional braking element (54) adapted to cooperate with at least a conventional brake disc (53) associated with said wheel (4).

15. A suspension according to Claims 13 and 14, characterized in that the braking element and the shock absorber (18) are laterally arranged on opposite sides of the guiding body (16).

16. A suspension according to Claim 1, characterized in that said suspension comprises a steering column (45) for directly transmitting the rotary movement of said handle-bar (47) to said front wheel (4), said column (45) being rigid with said guide (16) and being independent from said frame (2).

17. A suspension according to Claim 16, characterized in that said steering column (45) is restrained, by any known means, to at least an end portion of said guide (16).

18. A suspension according to Claim 1, characterized in that said steering column (45) is associated with a supporting element (88) restrained to at least one of said frame (2), said longitudinal arm (10) and said engine (3), said steering column (45) indirectly operating said wheel (4) in order to cause said wheel to turn.

19. A suspension according to Claim 18, characterized in that to said steering column (45) there is operatively coupled a rod (89) affecting a rocker assembly (91) coupled to a further rod (90) in turn connected to said guide (16) supported by said longitudinal rigid arm (10), the mutual connection of said rods (89, 90), rocker assembly (91), steering column (45) and guide (16) being obtained by hinges which are advantageously defined by ball couplings (93, 94, 98, 99), said rocker assembly (91) being pivoted on a pivot pin (92) rigid with the frame (2) of the motor-cycle (1).

## Claims (Claims for the following Contracting State(s): AT, ES)

1. A front suspension for motorcycles of the type comprising a frame (2), an engine (4), a handle-bar (47), a front wheel (4) and a rear wheel (5), each said wheel being provided with a disc (7) and a pneumatic tyre, said suspension having a rigid longitudinal arm (10) arranged laterally of the front wheel (4), said arm (10) bearing at its free end a support on which the wheel bearing axle (8) is mounted, and said suspension having a shock absorber element (18) adapted to absorb the shocks and stresses affecting said front wheel (4), characterized in that the arm (10) is rigidly and immovably attached to a portion of the vehicle immovable with respect to the frame, such that the arm (10) extends substantially parallel to the ground, and in that the support comprises a guiding body (16) adapted to operate as a guide for a slider element (17) to which the wheel bearing axle (8) is connected, said guiding body (16) and said slider element (17) being mutually connected through a shock absorber element (18) adapted to absorb the shocks and stresses affecting said front wheel (4), and in that the guiding body (16) is connected to the handle-bar (47) to be rotated therewith.

2. A suspension according to Claim 1, characterized in that said rigid longitudinal arm (10) is restrained to the engine (3) of the motor-cycle (1) by any known means.

3. A suspension according to Claim 1, characterized in that said longitudinal rigid arm (10) is restrained to the frame (2) of said motor-cycle (1) by any known means.

4. A suspension according to Claim 1, characterized in that said rigid arm (10) has a free end portion (13) of substantially fork shape and being provided with two ring like elements (14) adapted to rotatively support a body (20) of the guide (16) thereon the slider element (17) is driven.

5. A suspension according to Claim 4, characterized in that said guide (16) is supported by pins (21, 22) which are eccentrically arranged on the body (20) of said guide (16).

6. A suspension according to Claim 4, characterized in that said guide (16) is arranged with the axis (K) thereof slanted with respect to the axis (W) of the wheel (4).

7. A suspension according to Claim 4, characterized in that the body (20) of the guide is provided with a throughgoing elongated hole (24), therethrough the wheel bearing axle (8) can move as the motor-cycle (1) is used.

8. A suspension according to Claims 1 and 4, characterized in that between the guide (16) and smider element (17) there are arranged sliding elements (26), advantageously of a roller cage type, thereon said slider element (17) can slide, said sliding elements (26) being advantageously adapted for movement along sliding tracks (25) formed at least within said guide (16).

9. A suspension according to Claims 4 and 8, characterized in that said suspension comprises means (30, 33) adapted to compensate the clearance between the guide (16) and slider element (17) said means cooperating with said sliding elements (26).

10. A suspension according to Claim 9, characterized in that said means for compensating said clearance comprises at least a wedge element (33) arranged between the guide (16) and slider element (17), said wedge element (33) being adapted to be locked in a set position by conventional screw clamping means (32) cooperating with said slider element (17).

11. A suspension according to Claim 9, characterized in that said means for compensating said clearance comprise a removable element (30) arranged on a side (17A) of said slider element (17), said removable element cooperating with said sliding elements (26) arranged at said guide (16).

12. A suspension according to Claim 1, characterized in that said longitudinal rigid arm (10) has a portion (10A) thereof spaced from the longitudinal axis (X) of said motor-cycle.

13. A suspension according to Claim 1, characterized in that the shock absorber element (18) comprises a cylinder (40) rigid with said guide (16) and a piston (42) which can be mutually displaced in said cylinder (40) and being rigid with said slider element (17).

14. A suspension according to Claim 1, characterized in that said slider element supports at least a conventional braking element (54) adapted to cooperate with at least a conventional brake disc (53) associated with said wheel (4).

15. A suspension according to Claims 13 and 14, characterized in that the braking element and the shock absorber (18) are laterally arranged on opposite sides of the guiding body (16).

16. A suspension according to Claim 1, characterized in that said suspension comprises a steering column (45) for directly transmitting the rotary movement of said handle-bar (47) to said front wheel (4), said column (45) being rigid with said guide (16) and being independent from said frame (2).

17. A suspension according to Claim 16, characterized in that said steering column (45) is restrained, by any known means, to at least an end portion of said guide (16).

18. A suspension according to Claim 1, characterized in that said steering column (45) is associated with a supporting element (88) restrained to at least one of said frame (2), said longitudinal arm (10) and said engine (3), said steering column (45) indirectly operating said wheel (4) in order to cause said wheel to turn.

19. A suspension according to Claim 18, characterized in that to said steering column (45) there is operatively coupled a rod (89) affecting a rocker assembly (91) coupled to a further rod (90) in turn connected to said guide (16) supported by said longitudinal rigid arm (10), the mutual connection of said rods (89, 90), rocker assembly (91), steering column (45) and guide (16) being obtained by hinges which are advantageously defined by ball couplings (93, 94, 98, 99), said rocker assembly (91) being pivoted on a pivot pin (92) rigid with the frame (2) of the motor-cycle (1).

## Patentansprüche (Patentansprüche für folgende(n) Vertragsstaat(en): DE, FR, GB)

1. Vorderradaufhängung für Motorräder von der Art mit einem Rahmen (2), einem Motor (4), einem Lenker (47), einem Vorderrad (4) und einem Hinterrad (5), wobei jedes Rad eine Scheibe (7) und einen pneumatischen Reifen aufweist, wobei die Aufhängung einen festen, in Längsrichtung verlaufenden Arm (10) aufweist, der seitlich des Vorderrades (4) angeornet ist, wobei der Arm (10) an seinem freien Ende ein Lager trägt, an dem die Radlagerachse (8) angebracht ist, und wobei die Aufhängung ein Stoßdämpferelement (18) aufweist, das dazu ausgelegt ist, auf das Vorderrad (4) einwirkende Erschütterungen und Druck zu absorbieren, dadurch gekennzeichnet, daß der Arm (10) fest und unbeweglich an einem Fahrzeugteil, das unbeweglich in bezug auf den Rahmen ist, so angebracht ist, daß der Arm (10) im wesentlichen parallel zum Boden verläuft, und daß die Aufhängung einen Führungskörper (16) aufweist, der dazu ausgelegt ist, als Führung für ein Gleitelement (17) zu wirken, mit dem die Radlagerachse (8) verbunden ist, wobei der Führungskörper (16) und das Gleitelement (17) miteinander durch ein Stoßdämpferelement (18) verbunden sind, das dazu ausgelegt ist, die auf das Vorderrad (4) einwirkenden Erschütterungen und Druck zu absorbieren, und daß der Führungskörper (16) mit dem Lenker (47) verbunden ist, um damit gedreht zu werden, und daß das Stoßdämpferelement (18) vor dem Gleitelement (17) parallel dazu angeordnet und mit dem Gleitelement (17) so verbunden ist, daß die Parallelität während einer Bewegung der Aufhängung erhalten bleibt.

2. Aufhängung nach Anspruch 1, dadurch gekennzeichnet, daß der feste, längsverlaufende Arm (10) durch irgendein bekanntes Mittel an dem Motor (3) des Motorrads (1) befestigt ist.

3. Aufhängung nach Anspruch 1, dadurch gekennzeichnet, daß der feste, längsverlaufende Arm (10) durch irgendein bekanntes Mittel an dem Rahmen (2) des Motorrads (1) befestigt ist.

4. Aufhängung nach Anspruch 1, dadurch gekennzeichnet, daß der feste Arm (10) einen freien Endbereich (13) aufweist, der im wesentlichen gabelförmig ist und der mit zwei ringartigen Elementen (14) versehen ist, die dazu ausgelegt sind, einen Körper (20) der Führung (16) drehbar zu lagern, auf dem das Gleitelement (17) gelagert ist.

5. Aufhängung nach Anspruch 4, dadurch gekennzeichnet, daß die Führung (16) von Stiften (21, 22) getragen wird, die exzentrisch an dem Körper (20) der Führung (16) angeordnet sind.

6. Aufhängung nach Anspruch 4, dadurch gekennzeichnet, daß die Führung (16) mit ihrer Achse (K) geneigt gegenüber der Achse (W) des Rades (4) angeordnet ist.

7. Aufhängung nach Anspruch 4, dadurch gekennzeichnet, daß der Körper (20) mit einer hindurchgehenden, länglichen Öffnung (24) versehen ist, durch die die Radlagerachse (8) bewegt werden kann, wenn das Motorrad (1) benutzt wird.

8. Aufhängung nach Ansprüchen 1 und 4, dadurch gekennzeichnet, daß zwischen der Führung (16) und dem Gleitelement (17) Gleitelemente (26) angeordnet sind, vorzugsweise vom Kugellagertyp, auf denen das Gleitelement (17) gleiten kann, wobei die Gleitelemente (26) vorzugsweise zur Bewegung entlang von Gleitspuren (25) ausgelegt sind, die in der Führung (16) gebildet sind.

9. Aufhängung nach Ansprüchen 4 und 8, dadurch gekennzeichnet, daß die Aufhängung Mittel (30, 33) zum Kompensieren des Freiraums zwischen der Führung (16) und dem Gleitelement (17) aufweist, wobei die Mittel mit den Gleitelementen (26) zusammenwirken.

10. Aufhängung nach Anspruch 9, dadurch gekennzeichnet, daß die Mittel zum Kompensieren des Freiraums wenigstens ein Keilelement (33) aufweisen, das zwischen der Führung (16) und dem Gleitelement (17) angeordnet ist, wobei das Keilelement (33) dazu ausgelegt ist, in einer festgesetzten Position durch herkömmliche, mit dem Gleitelement (17) zusammenwirkende Schraubmittel (32) verschlossen zu werden.

11. Aufhängung nach Anspruch 9, dadurch gekennzeichnet, daß die Mittel zum Kompensieren des Freiraums ein entfernbares Element (30) aufweisen, das auf einer Seite (17A) des Gleitelements (17) angeordnet ist, wobei das entfernbare Element mit den an der Führung (16) angeordneten Gleitelementen (26) zusammenwirkt.

12. Aufhängung nach Anspruch 1, dadurch gekennzeichnet, daß der feste, längsverlaufende Arm (10) einen Bereich (10A) aufweist, der Abstand von der Längsachse (X) des Motorrads hat.

13. Aufhängung nach Anspruch 1, dadurch gekennzeichnet, daß das Stoßdämpferelement (18) einen fest mit der Führung (16) verbundenen Zylinder (40) und einen Kolben (42) aufweist, der gegenüber dem Zylinder (40) verschiebbar ist und mit dem Gleitelement (17) fest verbunden ist.

14. Aufhängung nach Anspruch 1, dadurch gekennzeichnet, daß das Gleitelement wenigstens ein herkömmliches Bremselement (54) trägt, das dazu ausgelegt ist, mit wenigstens einer zu dem Rad (4) gehörigen herkömmlichen Bremsscheibe (53) zusammenzuwirken.

15. Aufhängung nach Ansprüchen 13 und 14, dadurch gekennzeichnet, daß das Bremselement und der Stoßdämpfer (18) seitlich auf gegenüberliegenden Seiten des Führungskörpers (16) angeordnet sind.

16. Aufhängung nach Anspruch 1, dadurch gekennzeichnet, daß die Aufhängung eine Lenksäule (45) zur direkten Übertragung der Drehbewegung des Lenkers (47) auf das Vorderrad (4) aufweist, wobei die Säule (45) fest mit der Führung (16) verbunden ist und unabhängig vom Rahmen (2) ist.

17. Aufhängung nach Anspruch 16, dadurch gekennzeichnet, daß die Lenksäule (45) durch irgendein bekanntes Mittel an wenig- stens einem Endbereich der Führung (16) gehalten ist.

18. Aufhängung nach Anspruch 1, dadurch gekennzeichnet, daß zu der Lenksäule (45) ein Tragelement (88) gehörig ist, das an wenigstens einem von dem Rahmen (2), dem längsverlaufenden Arm (10) und dem Motor (3) gehalten ist, wobei die Lenksäule (45) indirekt auf das Rad (4) einwirkt, um das Rad zu drehen.

19. Aufhängung nach Anspruch 18, dadurch gekennzeichnet, daß die Lenksäule (45) operativ mit einer Stange (89) verbunden ist, die auf eine Hebelanordnung (91) einwirkt, die mit einer weiteren Stange (90) verbunden ist, die wiederum mit der Führung (16) verbunden ist, welche von dem festen, längsverlaufenden Arm (10) getragen wird, wobei die gegenseitige Verbindungen der Stangen (89, 90), der Hebelanordnung (91), der Lenksäule (45) und der Führung (16) durch Gelenke gebildet werden, die vorteilhafterweise als Kugelgelenke (93, 94, 98, 99) gestaltet sind, wobei die Hebelanordnung (91) schwenkbar an einem Hebelzapfen (92) gelagert ist, der fest mit dem Rahmen (2) des Motorrads (1) verbunden ist.

## Patentansprüche (Patentansprüche für folgende(n) Vertragsstaat(en): AT, ES)

1. Vorderradaufhängung für Motorräder von der Art mit einem Rahmen (2), einem Motor (4), einem Lenker (47), einem Vorderrad (4) und einem Hinterrad (5), wobei jedes Rad eine Scheibe (7) und einen pneumatischen Reifen aufweist, wobei die Aufhängung einen festen, in Längsrichtung verlaufenden Arm (10) aufweist, der seitlich des Vorderrades (4) angeordnet ist, wobei der Arm (10) an seinem freien Ende ein Lager trägt, an dem die Radlagerachse (8) angebracht ist, und wobei die Aufhängung ein Stoßdämpferelement (18) aufweist, das dazu ausgelegt ist, auf das Vorderrad (4) einwirkende Erschütterungen und Druck zu absorbieren, dadurch gekennzeichnet, daß der Arm (10) fest und unbeweglich an einem Fahrzeugteil, das unbeweglich in bezug auf den Rahmen ist, so angebracht ist, daß der Arm (10) im wesentlichen parallel zum Boden verläuft, und daß die Aufhängung einen Führungskörper (16) aufweist, der dazu ausgelegt ist, als Führung für ein Gleitelement (17) zu wirken, mit dem die Radlagerachse (8) verbunden ist, wobei der Führungskörper (16) und das Gleitelement (17) miteinander durch ein Stoßdämpferelement (18) verbunden sind, das dazu ausgelegt ist, die auf das Vorderrad (4) einwirkenden Erschütterungen und Druck zu absorbieren, und daß der Führungskörper (16) mit dem Lenker (47) verbunden ist, um damit gedreht zu werden.

2. Aufhängung nach Anspruch 1, dadurch gekennzeichnet, daß der feste, längsverlaufende Arm (10) durch irgendein bekanntes Mittel an dem Motor (3) des Motorrads (1) befestigt ist.

3. Aufhängung nach Anspruch 1, dadurch gekennzeichnet, daß der feste, längsverlaufende Arm (10) durch irgendein bekanntes Mittel an dem Rahmen (2) des Motorrads (1) befestigt ist.

4. Aufhängung nach Anspruch 1, dadurch gekennzeichnet, daß der feste Arm (10) einen freien Endbereich (13) aufweist, der im wesentlichen gabelförmig ist und der mit zwei ringartigen Elementen (14) versehen ist, die dazu ausgelegt sind, einen Körper (20) der Führung (16) drehbar zu lagern, auf dem das Gleitelement (17) gelagert ist.

5. Aufhängung nach Anspruch 4, dadurch gekennzeichnet, daß die Führung (16) von Stiften (21, 22) getragen wird, die exzentrisch an dem Körper (20) der Führung (16) angeordnet sind.

6. Aufhängung nach Anspruch 4, dadurch gekennzeichnet, daß die Führung (16) mit ihrer Achse (K) geneigt gegenüber der Achse (W) des Rades (4) angeordnet ist.

7. Aufhängung nach Anspruch 4, dadurch gekennzeichnet, daß der Körper (20) mit einer hindurchgehenden, länglichen Öffnung (24) versehen ist, durch die die Radlagerachse (8) bewegt werden kann, wenn das Motorrad (1) benutzt wird.

8. Aufhängung nach Ansprüchen 1 und 4, dadurch gekennzeichnet, daß zwischen der Führung (16) und dem Gleitelement (17) Gleitelemente (26) angeordnet sind, vorzugsweise vom Kugellagertyp, auf denen das Gleitelement (17) gleiten kann, wobei die Gleitelemente (26) vorzugsweise zur Bewegung entlang von Gleitspuren (25) ausgelegt sind, die in der Führung (16) gebildet sind.

9. Aufhängung nach Ansprüchen 4 und 8, dadurch gekennzeichnet, daß die Aufhängung Mittel (30, 33) zum Kompensieren des Freiraums zwischen der Führung (16) und dem Gleitelement (17) aufweist, wobei die Mittel mit den Gleitelementen (26) zusammenwirken.

10. Aufhängung nach Anspruch 9, dadurch gekennzeichnet, daß die Mittel zum Kompensieren des Freiraums wenigstens ein Keilelement (33) aufweisen, das zwischen der Führung (16) und dem Gleitelement (17) angeordnet ist, wobei das Keilelement (33) dazu ausgelegt ist, in einer festgesetzten Position durch herkömmliche, mit dem Gleitelement (17) zusammenwirkende Schraubmittel (32) verschlossen zu werden.

11. Aufhängung nach Anspruch 9, dadurch gekennzeichnet, daß die Mittel zum Kompensieren des Freiraums ein entfernbares Element (30) aufweisen, das auf einer Seite (17A) des Gleitelements (17) angeordnet ist, wobei das entfernbare Element mit den an der Führung (16) angeordneten Gleitelementen (26) zusammenwirkt.

12. Aufhängung nach Anspruch 1, dadurch gekennzeichnet, daß der feste, längsverlaufende Arm (10) einen Bereich (10A) aufweist, der Abstand von der Längsachse (X) des Motorrads hat.

13. Aufhängung nach Anspruch 1, dadurch gekennzeichnet, daß das Stoßdämpferelement (18) einen fest mit der Führung (16) verbundenen Zylinder (40) und einen Kolben (42) aufweist, der gegenüber dem Zylinder (40) verschiebbar ist und mit dem Gleitelement (17) fest verbunden ist.

14. Aufhängung nach Anspruch 1, dadurch gekennzeichnet, daß das Gleitelement wenigstens ein herkömmliches Bremselement (54) trägt, das dazu ausgelegt ist, mit wenigstens einer zu dem Rad (4) gehörigen herkömmlichen Bremsscheibe (53) zusammenzuwirken.

15. Aufhängung nach Ansprüchen 13 und 14, dadurch gekennzeichnet, daß das Bremselement und der Stoßdämpfer (18) seitlich auf gegenüberliegenden Seiten des Führungskörpers (16) angeordnet sind.

16. Aufhängung nach Anspruch 1, dadurch gekennzeichnet, daß die Aufhängung eine Lenksäule (45) zur direkten Übertragung der Drehbewegung des Lenkers (47) auf das Vorderrad (4) aufweist, wobei die Säule (45) fest mit der Führung (16) verbunden ist und unabhängig vom Rahmen (2) ist.

17. Aufhängung nach Anspruch 16, dadurch gekennzeichnet, daß die Lenksäule (45) durch irgendein bekanntes Mittel an wenigstens einem Endbereich der Führung (16) gehalten ist.

18. Aufhängung nach Anspruch 1, dadurch gekennzeichnet, daß zu der Lenksäule (45) ein Tragelement (88) gehörig ist, das an wenigstens einem von dem Rahmen (2), dem längsverlaufenden Arm (10) und dem Motor (3) gehalten ist, wobei die Lenksäule (45) indirekt auf das Rad (4) einwirkt, um das Rad zu drehen.

19. Aufhängung nach Anspruch 18, dadurch gekennzeichnet, daß die Lenksäule (45) operativ mit einer Stange (89) verbunden ist, die auf eine Hebelanordnung (91) einwirkt, die mit einer weiteren Stange (90) verbunden ist, die wiederum mit der Führung (16) verbunden ist, welche von dem festen, längsverlaufenden Arm (10) getragen wird, wobei die gegenseitige Verbindungen der Stangen (89, 90), der Hebelanordnung (91), der Lenksäule (45) und der Führung (16) durch Gelenke gebildet werden, die vorteilhafterweise als Kugelgelenke (93, 94, 98, 99) gestaltet sind, wobei die Hebelanordnung (91) schwenkbar an einem Hebelzapfen (92) gelagert ist, der fest mit dem Rahmen (2) des Motorrads (1) verbunden ist.

## Revendications (Revendications pour l'(les) Etat(s) contractant(s) suivant(s): DE, FR, GB)

1. Suspension antérieure de motocycle du type comprenant un cadre (2), un moteur (3), un guidon (47), une roue avant (4) et une roue arrière (5), chacune desdites roues étant dotée d'un disque (7) et d'un pneu, ladite suspension comportant un bras longitudinal rigide (10) disposé sur le côté de la roue avant (4), ledit bras (10) portant à son extrémité libre un support recevant l'axe de roue (8), et ladite suspension comportant un élément amortisseur (18) adapté pour absorber les chocs et les contraintes affectant ladite roue avant (4), caractérisée en ce que le bras (10) est fixé de manière rigide et immobile à une partie du véhicule immobile par rapport au cadre, de telle sorte que le bras (10) s'étende essentiellement parallèlement au sol, et en ce que le support comprend un corps de guidage (16) adapté pour servir de guide pour une tête coulissante (17) à laquelle l'axe de roue (8) est relié, ledit corps de guidage (16) et ladite tête coulissante (17) étant reliés entre eux par un élément amortisseur (18) adapté pour absorber les chocs et les contraintes affectant ladite roue avant (4), en ce que le corps de guidage (16) est relié au guidon (47) pour pivoter avec ce dernier ; et en ce que l'élément amortisseur (18) est situé en face de la tête coulissante (17) parallèlement à cette dernière et est relié à la tête coulissante (17) de telle sorte que ledit parallélisme soit conservé lors du mouvement de suspension.

2. Suspension selon la revendication 1, caractérisée en ce que ledit bras longitudinal rigide (10) est fixé sur le moteur (3) du motocycle (1) par n'importe quel moyen connu.

3. Suspension selon la revendication 1, caractérisée en ce que ledit bras longitudinal rigide (10) est fixé sur le cadre (2) dudit motocycle (1) par n'importe quel moyen connu.

4. Suspension selon la revendication 1, caractérisée en ce que ledit bras rigide (10) présente une extrémité libre (13) affectant essentiellement la forme d'une fourche et dotée de deux éléments annulaires (14) adaptés pour supporter libre en rotation un corps (20) du guide (16) sur lequel la tête coulissante (17) est entraînée.

5. Suspension selon la revendication 4, caractérisée en ce que ledit guide (16) est supporté par des ergots (21, 22) qui sont agencés de manière excentrée sur le corps (20) dudit guide (16).

6. Suspension selon la revendication 4, caractérisée en ce que ledit guide (16) est agencé avec son axe (K) incliné par rapport à l'axe (W) de la roue (4).

7. Suspension selon la revendication 4, caractérisée en ce que le corps (20) du guide est doté d'un trou oblong traversant (24), à travers lequel l'axe de roue (8) peut bouger lorsque le motocycle (1) fonctionne.

8. Suspension selon les revendications 1 à 4, caractérisée en ce qu'entre le guide (16) et la tête coulissante (17) sont disposés des éléments coulissants (26), avantageusement du type à cage à rouleaux, sur lesquels peut coulisser la tête coulissante (17), lesdits éléments coulissants (26) étant avantageusement adaptés pour se déplacer le long de pistes de coulissement (25) formées au moins à l'intérieur dudit guide (16).

9. Suspension selon les revendications 4 et 8, caractérisée en ce que ladite suspension comprend des moyens (30, 33) adaptés pour compenser le jeu entre le guide (16) et la tête coulissante (17), ledit moyen coopérant avec lesdits éléments coulissants (26).

10. Suspension selon la revendication 9, caractérisée en ce que ledit moyen de compensation dudit jeu comprend au moins un élément de calage (33) disposé entre le guide (16) et la tête coulissante (17), ledit élément de calage (33) étant adapté pour être verrouillé dans une position fixe par un moyen de serrage par vis classique (32) coopérant avec ladite tête coulissante (17).

11. Suspension selon la revendication 9, caractérisée en ce que ledit moyen de compensation dudit jeu comprend un élément amovible (30) disposé sur un côté (17A) de ladite tête coulissante (17), ledit élément amovible coopérant avec lesdits éléments coulissants (26) disposés sur ledit guide (16).

12. Suspension selon la revendication 1, caractérisée en ce qu'une partie (10A) du bras longitudinal rigide (10) est espacée de l'axe longitudinal (X) dudit motocycle.

13. Suspension selon la revendication 1, caractérisée en ce que l'élément amortisseur (18) comprend un cylindre (40) solidaire dudit guide (16) et un piston (42) susceptible d'être déplacé relativement dans ledit cylindre (40) et solidaire de ladite tête coulissante (17).

14. Suspension selon la revendication 1, caractérisée en ce que ladite tête coulissante supporte au moins un élément de freinage (54) classique adapté pour coopérer avec au moins un disque de freinage (53) associé à ladite roue (4).

15. Suspension selon les revendications 13 et 14, caractérisée en ce que l'élément de freinage et l'amortisseur (18) sont agencés latéralement sur les côtés opposés du corps de guidage (16).

16. Suspension selon la revendication 1, caractérisée en ce que ladite suspension comprend une colonne de direction (45) pour transmettre directement le mouvement rotatif dudit guidon (47) à ladite roue avant (4), ladite colonne (45) étant solidaire dudit guide (16) et étant indépendante dudit cadre (2).

17. Suspension selon la revendication 16, caractérisée en ce que ladite colonne de direction (45) est fixée, d'une manière connue quelconque, à au moins une extrémité dudit guide (16).

18. Suspension selon la revendication 1, caractérisée en ce que ladite colonne de direction (45) est associée à un élément support (88) fixé à au moins un des éléments suivants : cadre (2), bras longitudinal (10), moteur (3), ladite colonne de direction (45) commandant indirectement ladite roue (4) afin de la faire tourner.

19. Suspension selon la revendication 18, caractérisée en ce qu'à ladite colonne de direction (45) est couplée de façon opérationnelle une tige (89) coopérant avec un système de levier (91) couplé à une autre tige (90) elle-même reliée audit guide (16) supporté par ledit bras rigide longitudinal (10), les connexions respectives desdites tiges (89, 90), système de levier (91), colonne de direction (45) et guide (16) étant obtenues par des articulations qui consistent avantageusement en des assemblages à rotule (93, 94, 98, 99), ledit ensemble de levier (91) pivotant autour d'un axe de pivot (92) solidaire du cadre (2) du motocycle (1).

## Revendications (Revendications pour l'(les) Etat(s) contractant(s) suivant(s): AT, ES)

1. Suspension antérieure de motocycle du type comprenant un cadre (2), un moteur (3), un guidon (47), une roue avant (4) et une roue arrière (5), chacune desdites roues étant dotée d'un disque (7) et d'un pneu, ladite suspension comportant un bras longitudinal rigide (10) disposé sur le côté de la roue avant (4), ledit bras (10) portant à son extrémité libre un support recevant l'axe de roue (8), et ladite suspension comportant un élément amortisseur (18) adapté pour absorber les chocs et les contraintes affectant ladite roue avant (4), caractérisée en ce que le bras (10) est fixé de manière rigide et immobile à une partie du véhicule immobile par rapport au cadre, de telle sorte que le bras (10) s'étende essentiellement parallèlement au sol, et en ce que le support comprend un corps de guidage (16) adapté pour servir de guide pour une tête coulissante (17) à laquelle l'axe de roue (8) est relié, ledit corps de guidage (16) et ladite tête coulissante (17) étant reliés entre eux par un élément amortisseur (18) adapté pour absorber les chocs et les contraintes affectant ladite roue avant (4), en ce que le corps de guidage (16) est relié au guidon (47) pour pivoter avec ce dernier.

2. Suspension selon la revendication 1, caractérisée en ce que ledit bras longitudinal rigide (10) est fixé sur le moteur (3) du motocycle (1) par n'importe quel moyen connu.

3. Suspension selon la revendication 1, caractérisée en ce que ledit bras longitudinal rigide (10) est fixé sur le cadre (2) dudit motocycle (1) par n'importe quel moyen connu.

4. Suspension selon la revendication 1, caractérisée en ce que ledit bras rigide (10) présente une extrémité libre (13) affectant essentiellement la forme d'une fourche et dotée de deux éléments annulaires (14) adaptés pour supporter libre en rotation un corps (20) du guide (16) sur lequel la tête coulissante (17) est entraînée.

5. Suspension selon la revendication 4, caractérisée en ce que ledit guide (16) est supporté par des ergots (21, 22) qui sont agencés de manière excentrée sur le corps (20) dudit guide (16).

6. Suspension selon la revendication 4, caractérisée en ce que ledit guide (16) est agencé avec son axe (K) incliné par rapport à l'axe (W) de la roue (4).

7. Suspension selon la revendication 4, caractérisée en ce que le corps (20) du guide est doté d'un trou oblong traversant (24), à travers lequel l'axe de roue (8) peut bouger lorsque le motocycle (1) fonctionne.

8. Suspension selon les revendications 1 à 4, caractérisée en ce qu'entre le guide (16) et la tête coulissante (17) sont disposés des éléments coulissants (26), avantageusement du type à cage à rouleaux, sur lesquels peut coulisser la tête coulissante (17), lesdits éléments coulissants (26) étant avantageusement adaptés pour se déplacer le long de pistes de coulissement (25) formées au moins à l'intérieur dudit guide (16).

9. Suspension selon les revendications 4 et 8, caractérisée en ce que ladite suspension comprend des moyens (30, 33) adaptés pour compenser le jeu entre le guide (16) et la tête coulissante (17), ledit moyen coopérant avec lesdits éléments coulissants (26).

10. Suspension selon la revendication 9, caractérisée en ce que ledit moyen de compensation dudit jeu comprend au moins un élément de calage (33) disposé entre le guide (16) et la tête coulissante (17), ledit élément de calage (33) étant adapté pour être verrouillé dans une position fixe par un moyen de serrage par vis classique (32) coopérant avec ladite tête coulissante (17).

11. Suspension selon la revendication 9, caractérisée en ce que ledit moyen de compensation dudit jeu comprend un élément amovible (30) disposé sur un côté (17A) de ladite tête coulissante (17), ledit élément amovible coopérant avec lesdits éléments coulissants (26) disposés sur ledit guide (16).

12. Suspension selon la revendication 1, caractérisée en ce qu'une partie (10A) du bras longitudinal rigide (10) est espacée de l'axe longitudinal (X) dudit motocycle.

13. Suspension selon la revendication 1, caractérisée en ce que l'élément amortisseur (18) comprend un cylindre (40) solidaire dudit guide (16) et un piston (42) susceptible d'être déplacé relativement dans ledit cylindre (40) et solidaire de ladite tête coulissante (17).

14. Suspension selon la revendication 1, caractérisée en ce que ladite tête coulissante supporte au moins un élément de freinage (54) classique adapté pour coopérer avec au moins un disque de freinage (53) associé à ladite roue (4).

15. Suspension selon les revendications 13 et 14, caractérisée en ce que l'élément de freinage et l'amortisseur (18) sont agencés latéralement sur les côtés opposés du corps de guidage (16).

16. Suspension selon la revendication 1, caractérisée en ce que ladite suspension comprend une colonne de direction (45) pour transmettre directement le mouvement rotatif dudit guidon (47) à ladite roue avant (4), ladite colonne (45) étant solidaire dudit guide (16) et étant indépendante dudit cadre (2).

17. Suspension selon la revendication 16, caractérisée en ce que ladite colonne de direction (45) est fixée, d'une manière connue quelconque, à au moins une extrémité dudit guide (16).

18. Suspension selon la revendication 1, caractérisée en ce que ladite colonne de direction (45) est associée à un élément support (88) fixé à au moins un des éléments suivants : cadre (2), bras longitudinal (10), moteur (3), ladite colonne de direction (45) commandant indirectement ladite roue (4) afin de la faire tourner.

19. Suspension selon la revendication 18, caractérisée en ce qu'à ladite colonne de direction (45) est couplée de façon opérationnelle une tige (89) coopérant avec un système de levier (91) couplé à une autre tige (90) elle-même reliée audit guide (16) supporté par ledit bras rigide longitudinal (10), les connexions respectives desdites tiges (89, 90), système de levier (91), colonne de direction (45) et guide (16) étant obtenues par des articulations qui consistent avantageusement en des assemblages à rotule (93, 94, 98, 99), ledit ensemble de levier (91) pivotant autour d'un axe de pivot (92) solidaire du cadre (2) du motocycle (1).
